# EUROPEAN PATENT SPECIFICATION

(11) **EP 4 465 593 B1**
(45) Date of publication and mention of the grant of the patent: **22.04.2026**
(21) Application number: 22926801.6
(22) Date of filing: 10.11.2022
(51) Int. Cl.: H04L 9/40, H04L 9/08, H04L 101/622, H04L 61/5007, H04L 61/5046, H04W 12/02, H04W 12/03, H04W 12/71

(54) **COMMUNICATION SYSTEM, NETWORK LAYER ADDRESS GENERATION METHOD AND RELATED DEVICE**
KOMMUNIKATIONSSYSTEM, VERFAHREN ZUR ERZEUGUNG VON NETZWERKSCHICHTADRESSEN UND ZUGEHÖRIGE VORRICHTUNG
SYSTÈME DE COMMUNICATION, PROCÉDÉ DE GÉNÉRATION D'ADRESSE DE COUCHE DE RÉSEAU ET DISPOSITIF ASSOCIÉ

(30) Priority: 17.02.2022 CN 202210147500
(43) Date of publication of application: 20.11.2024
(73) Proprietor: Huawei Technologies Co., Ltd., Shenzhen, Guangdong 518129 (CN)
(72) Inventor: LI, Yinghui, Shenzhen, Guangdong 518129 (CN); JIANG, Weiyu, Shenzhen, Guangdong 518129 (CN); LIU, Bingyang, Shenzhen, Guangdong 518129 (CN); YANG, Fei, Shenzhen, Guangdong 518129 (CN); SONG, Xinyi, Shenzhen, Guangdong 518129 (CN); WU, Xinggui, Shenzhen, Guangdong 518129 (CN)
(74) Representative: Gill Jennings & Every LLP
(86) International application number: PCT/CN2022/131221
(87) International publication number: WO 2023/155497

(56) References cited:
- CN-A- 105 282 266
- CN-A- 106 790 741
- CN-A- 109 151 096
- JP-A- 2013 222 993
- US-A1- 2006 253 704
- US-A1- 2007 260 884
- US-B2- 7 706 539

## Description

### CROSS-REFERENCE TO RELATED APPLICATIONS

This application claims priority to Chinese Patent Application No. 202210147500.2, filed with the China National Intellectual Property Administration on February 17, 2022 and entitled "COMMUNICATION SYSTEM, METHOD FOR GENERATING NETWORK LAYER ADDRESS, AND RELATED DEVICE".

### TECHNICAL FIELD

This application relates to the communication field, and in particular, to a communication system, a method for generating a network layer address, and a related device.

### BACKGROUND

Before initiating a connection, a network device needs to perform processes such as address allocation, service discovery, and address resolution to obtain a network layer address of the network device itself and a MAC address corresponding to the network layer address. The network device can send a network layer data packet to a peer end on a same layer 2 network only after obtaining the local network layer address, a peer network layer address, and a peer MAC address. A process of obtaining the network layer address and resolving the MAC address corresponding to the peer network layer address causes a delay, and the delay affects end-to-end connection establishment and user experience of the network device.

Network layer address allocation of a current network device is mostly implemented through a dynamic host configuration protocol (Dynamic Host Configuration Protocol, DHCP). The network device applies to a DHCP server for a network layer address through the DHCP protocol, and the DHCP server allocates the network layer address to the network device based on this application. In other words, the network device implements network layer address allocation through signaling interaction between the network device and the DHCP server. In the network layer address allocation process, two signaling interactions are required, and delay overheads are high.

After obtaining the network layer address, the current network device mostly uses an address resolution protocol (Address Resolution Protocol, ARP) to search for a MAC address corresponding to the network layer address. In this process, at least one signaling interaction is required, and the interaction causes an address resolution delay. JP 2013 222993 A forms part of the background art and discloses a wireless communication system and a wireless communication method capable of starting projection by an operation of a connected wireless terminal device. US 2007/260884 A1 froms part of the background art and discloses a method and apparatus for address creation and validation within a communication system. US 7706539 B2 also forms part of the background art and discloses a method of guaranteeing a user's anonymity and a wireless LAN system therefor, by using a temporary address generated from a unique Media Access Control (MAC) address as a source address or a destination address.

### SUMMARY

The invention is defined by the independent claims that accompany this disclosure. Any examples and embodiments of the description not falling within the scope of the claims do not form part of the invention as defined by the independent claims.

In view of this, it is necessary to provide a communication system, a method for generating a network layer address, and a related device, to reduce a delay in obtaining and resolving the network layer address, and further reduce a delay in establishing an end-to-end connection between nodes, thereby improving user experience.

A first aspect of embodiments of this application discloses a communication system. The communication system includes at least two nodes. The at least two nodes belong to a same layer 2 network and the at least two nodes are capable of communicating with each other. The layer 2 network has well-known information, and the well-known information is information that is capable of being obtained by the at least two nodes.

The node is configured to: obtain the well-known information of the communication system; form a well-known key based on the well-known information and a preset key derivation algorithm; obtain a MAC address of a first node, and form a first random number; form first plaintext data based on the MAC address and the first random number; and encrypt the first plaintext data based on the well-known key and a preset symmetric encryption algorithm, to form a first network layer address.

According to the technical solution, a node locally forms a well-known key based on well-known information and a key derivation algorithm, and forms a first network layer address based on the well-known key, a MAC address of the node, and a symmetric encryption algorithm. The first network layer address is a network layer address for data transmission between a first node and another node. Because the network layer address can be generated inside the first node, compared with a process of generating a network layer address in a DHCP protocol and an APR protocol, in this process, signaling interaction between nodes is reduced, delay overheads of obtaining the network layer address by the node and a delay in resolving the network layer address to obtain a corresponding MAC address are reduced. In this way, a delay in establishing an end-to-end connection between nodes is reduced, thereby improving user experience.

Further, the well-known information may be obtained by all nodes in the communication system, that is, each node may generate a corresponding network address based on the well-known information and a MAC address of each node itself, and establish an association between the MAC address of each node and the network side address. In addition, in a process of transmitting the network layer address, because the MAC address is in an encrypted state, that is, another node on the layer 2 network cannot obtain a corresponding MAC address based on the network layer address, thereby ensuring security of the MAC address.

In some embodiments, the communication system further includes a subnet center. The subnet center is configured to send a first broadcast message to the at least two nodes, where the first broadcast message carries a MAC address of the subnet center. The at least two nodes are configured to: receive the first broadcast message sent by the subnet center, and set the MAC address of the subnet center as the well-known information.

According to the technical solution, a broadcast message sent by a subnet center is received, and well-known information is determined based on a MAC address in the broadcast message. In this way, all nodes on a same layer 2 network can obtain the broadcast message, and can use the MAC address in the broadcast message as the well-known information.

A plurality of nodes on the same layer 2 network may directly communicate with each other. The plurality of nodes on the same layer 2 network may also communicate with each other via the subnet center.

Optionally, in another embodiment, the well-known information may also be another field, for example, a random number sent by the subnet center through the broadcast message, provided that all the nodes on the same layer 2 network can obtain the well-known information.

In some embodiments, the subnet center is further configured to: form a second random number; and send a second broadcast message to the at least two nodes, where the second broadcast message carries the second random number. The node is further configured to: receive the second broadcast message sent by the subnet center; parse the second broadcast message to obtain the second random number and set the second random number as a salt of the key derivation algorithm; and form the well-known key based on the well-known information, the salt, and the key derivation algorithm.

According to the technical solution, a random number formed by the subnet center is used as a salt of the key derivation algorithm, to ensure that a key formed by the key derivation algorithm each time is different, thereby improving security of the well-known key.

In some embodiments, the first node is further configured to: obtain information about a routing table, where the information about a routing table includes globally unique identifiers of the at least two nodes and target network layer addresses corresponding to the globally unique identifiers. If a target network layer address same as the first network layer address exists in the routing table, the node is further configured to: form a third random number; form second plaintext data based on the MAC address of the node and the third random number; and encrypt the second plaintext data based on the well-known key and the preset symmetric encryption algorithm, to form a second network layer address.

According to the technical solution, whether a network side layer address same as that of the first node exists in information about a routing table is checked. If the network side layer address exists, the network layer address is updated, to avoid a conflict between node addresses on the same layer 2 network.

In some embodiments, the node is configured to: obtain the well-known information of the communication system; form the well-known key based on the well-known information and the key derivation algorithm; obtain the first network layer address of the node; and decrypt the first network layer address based on the well-known key and the preset symmetric encryption algorithm, to obtain the MAC address of the node.

According to the technical solution, when receiving the network layer address, another node may obtain a MAC address of the node based on a decrypted network layer address of the node, thereby avoiding direct transmission of the MAC address between nodes and improving security of the MAC address.

In some embodiments, the node is further configured to form a correspondence between the MAC address and the first network layer address.

According to the technical solution, a correspondence between the MAC address and the network layer address is established. When data is transmitted between nodes next time, the MAC address is avoided to be decrypted again, thereby improving data transmission efficiency.

In some embodiments, the node is further configured to: determine a target node in the at least two nodes as a primary node; and obtain a MAC address of the second node and set the MAC address of the target node as the well-known information.

According to the technical solution, for a communication system in which nodes are directly connected, a primary node between the at least two nodes is determined, and a MAC address of the primary node is used as the well-known information.

In some embodiments, if the target node is a communication initiator, the node is further configured to: determine, based on that the target node is the communication initiator, the target node as the primary node.

According to the technical solution, a node as a communication initiator in the communication system in which the nodes are directly connected is used as a primary node, to facilitate identification and confirmation.

In some embodiments, the subnet center is a Wi-Fi wireless access point, and the at least two nodes are stations.

A second aspect provides a method for generating a network layer address, applied to a node. The node belongs to a layer 2 network, the layer 2 network has well-known information, and all nodes on the layer 2 network are capable of obtaining the well-known information. The method includes: obtaining the well-known information; forming a well-known key based on the well-known information and a preset key derivation algorithm; obtaining a MAC address of the node, and forming a first random number; forming first plaintext data based on the MAC address of the node and the first random number; and encrypting the first plaintext data based on the well-known key and a preset symmetric encryption algorithm, to form a first network layer address.

In some embodiments, the node communicates with another node via a subnet center, and the obtaining the well-known information includes: receiving a first broadcast message sent by the subnet center, and setting a MAC address of the subnet center as the well-known information.

In some embodiments, the forming a well-known key based on the well-known information and a preset key derivation algorithm includes: receiving a second broadcast message sent by the subnet center, where the second broadcast message carries a second random number formed by the subnet center; setting the second random number as a salt of the key derivation algorithm; and forming the well-known key based on the well-known information, the salt, and the key derivation algorithm.

In some embodiments, the method further includes: obtaining information about a routing table, where the information about a routing table includes a globally unique identifier of a target node in the at least two nodes and a network layer address corresponding to the globally unique identifier; if a network layer address same as the first network layer address exists in the routing table, forming a third random number; forming second plaintext data based on the MAC address of the node and the third random number; and encrypting the second plaintext data based on the well-known key and the symmetric encryption algorithm, to form a second network layer address.

In some embodiments, the layer 2 network further includes at least one node, and the method further includes: obtaining a third network layer address of a second node in the at least one node; and decrypting the third network layer address based on the well-known key and the symmetric encryption algorithm, to obtain a MAC address of the target node.

In some embodiments, the method further includes: forming a correspondence between the MAC address and the first network layer address.

In some embodiments, the obtaining the well-known information includes: determining a target node as a primary node; and obtaining a MAC address of the second node and setting the MAC address of the second node as the well-known information.

In some embodiments, if the target node is a communication initiator, the determining a target node as a primary node includes: determining, based on that the target node is the communication initiator, the target node as the primary node.

A third aspect provides a computer-readable storage medium. The computer-readable storage medium stores computer instructions, and when the computer instructions are run on an electronic device, the electronic device is enabled to perform the method in the second aspect.

A fourth aspect provides an electronic device. The electronic device includes a processor and a memory, the memory is configured to store instructions, and the processor is configured to invoke the instructions in the memory, so that the electronic device performs the method in any one of the second aspect.

A fifth aspect provides a chip, coupled to a memory in an electronic device. The chip is configured to control the electronic device to perform the method in the second aspect.

It may be understood that the method in the second aspect, the computer-readable storage medium in the third aspect, the electronic device in the fourth aspect, and the chip in the fifth aspect all correspond to the method in the first aspect. Therefore, for beneficial effect that can be achieved by the method, refer to beneficial effect in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of a method for generating a network layer address according to an embodiment of this application;
FIG. 3 is a diagram of an architecture of a communication system according to another embodiment of this application;
FIG. 4 is a diagram of a method for generating a network layer address according to another embodiment of this application;
FIG. 5 is a diagram of generating a network layer address according to still another embodiment of this application; and
FIG. 6 is a diagram of a structure of an electronic device according to an embodiment of this application.

### DESCRIPTION OF EMBODIMENTS

It should be noted that, in this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. In the specification, claims, and accompanying drawings of this application, the terms "first", "second", "third", "fourth", and the like (if existing) are intended to distinguish between similar objects but do not necessarily indicate a specific order or sequence.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

For ease of understanding, examples of some concepts related to embodiments of this application are described for reference.

### 1. Node (node)

The node is an electronic device that has data receiving and sending capabilities. For example, the node may be a car cockpit (Cockpit Domain) device, or a module in the car cockpit device (for example, one or more of modules such as a cockpit domain controller (cockpit domain controller, CDC), a camera, a screen, a microphone, a speaker, an electronic key, and a keyless access or startup system controller). In a specific implementation process, the node may alternatively be a data transit device, for example, a router, a repeater, a bridge, or a switch; may be a terminal device, for example, various types of user equipment (user equipment, UE), a mobile phone (mobile phone), a tablet computer (pad), a desktop computer, an earphone, and a speaker; may alternatively include a machine intelligent device, for example, a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a telemedicine (remote medical) device, a smart grid (smart grid) device, and a smart city (smart city) device; and may alternatively include a wearable device (for example, a smartwatch, a smart band, or a pedometer) and the like. In some technical scenarios, a device with the similar data receiving and sending capabilities may not be referred to as a node. However, for ease of description, electronic devices with the data receiving and sending capabilities are collectively referred to as a node in embodiments of this application.

### 2. Key derivation

The key derivation is to derive one or more secret values from one secret value, and an algorithm used to derive a key is referred to as a key derivation function (key derivation function, KDF), and is also referred to as a key derivation algorithm. For example, a new secret value DK derived from a secret value Key may be represented as follows: DK=KDF(Key).

Common key derivation algorithms include a password-based key derivation function (password-based key derivation function, PBKDF), a scrypt (scrypt) algorithm, and the like. The PBKDF algorithm further includes a first-generation PBKDF 1 and a second-generation PBKDF 2. Optionally, during specific implementation, in a key derivation process, a hash algorithm may be used to perform a hash change on an input secret value. Therefore, an algorithm identifier may be further received as an input in the KDF, to indicate a hash algorithm to be used.

### 3. Layer 2 network

In a communication system, the layer 2 network is a network that uses a media access control (media access control, MAC) address to perform addressing and forward a packet, for example, may be a virtual local area network (Virtual Local Area Network, VLAN), a virtual extensible local area network (Virtual eXtensible LAN, VXLAN), or a data link layer network.

The following describes a system architecture and a service scenario in embodiments of this application. It should be noted that the system architecture and the service scenario described in this application are intended to describe the technical solutions of this application more clearly, and do not constitute a limitation on the technical solutions provided in this application. A person of ordinary skill in the art may learn that, with evolution of a network architecture and emergence of a new service scenario, the technical solutions provided in this application are also applicable to resolving similar technical problems.

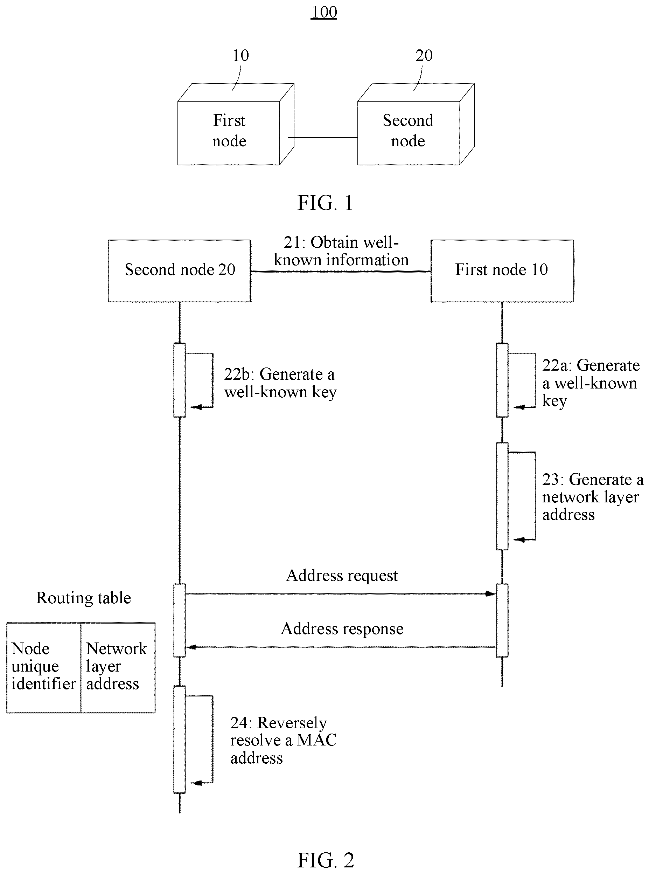

FIG. 1 is a diagram of an architecture of a communication system 100 according to an embodiment of this application. The communication system 100 includes a first node 10 and a second node 20. The first node 10 and the second node 20 belong to a same layer 2 network. The first node 10 may be requested by the second node 20 for association. After the association succeeds, the first node 10 may communicate with the second node 20 through a data link. Optionally, the data link for communication between the first node 10 and the second node 20 may include various types of connection media, for example, may be a short-distance connection technology or a long-distance connection technology. The short-distance connection technology includes, but is not limited to, 802.11b/g, Bluetooth (Bluetooth), Zigbee (Zigbee), a radio frequency identification (Radio Frequency Identification, RFID) technology, an ultra-wideband (Ultra-Wideband, UWB) technology, and the like. The long-distance connection technology includes, but is not limited to, a radio access type technology, for example, a global system for mobile communication (Global System for Mobile communication, GSM), a general packet radio service (General Packet Radio Service, GPRS), and a universal mobile telecommunications system (Universal Mobile Telecommunications System, UMTS). Certainly, it is not excluded that there is another technology that may be used to support communication between the first node 10 and the second node 20. This is not specifically limited herein.

In addition, the first node 10 and the second node 20 may be devices of a same type. For example, both the first node 10 and the second node 20 are mobile terminals. The first node 10 and the second node 20 may also be devices of different types. For example, the first node 10 may be a mobile terminal, and the second node 20 may be a switch.

In this embodiment, the communication system 100 in FIG. 1 includes only two nodes: a first node 10 and a second node 20. It may be understood that, in another embodiment, there are a plurality of first nodes 10 or second nodes 20. For example, there are two, three, four, or more than four second nodes 20, and each second node 20 may communicate with the first node 10.

Optionally, the first node 10 may be used as a primary node, and the second node 20 may be used as a secondary node.

Optionally, if the first node 10 may be a communication initiator, the first node 10 may be the primary node. Correspondingly, if the second node 20 may be a communication receiver, the second node 20 may be the secondary node. It may be understood that, in another embodiment, the primary node and the secondary node in the communication system 100 may be determined in another manner.

Each layer 2 network has well-known information, and the well-known information may be obtained by all nodes on the layer 2 network. The well-known information may be a MAC address of one of the nodes. Certainly, the well-known information may also be other identification information of the node, for example, a node identifier, provided that the well-known information may be obtained by another node on the same layer 2 network.

FIG. 2 shows a method for generating a network layer address according to this application. The method may be applied to the communication system 100 shown in FIG. 1. The method includes the following steps.

21: A first node 10 obtains well-known information.

In this method, the first node 10 may obtain well-known information of a layer 2 network.

A first node 10 and a second node 20 on a same layer 2 network may determine a primary node when establishing an association relationship, and the well-known information may be identification information of the primary node. The identification information may be a MAC address of the primary node. Certainly, the identifier information may also be other information, for example, a universally unique identifier (Universally Unique Identifier, UUID) of the primary node.

For example, before the obtaining the well-known information, the method further includes:

The primary node is set based on types of the first node 10 and the second node 20, and the MAC address of the primary node is set as the well-known information.

Specifically, in some embodiments, if the first node 10 and the second node 20 are devices of a same type, for example, both the first node 10 and the second node 20 are mobile terminals or switches, a node that initiates an association request or a communication request may be set as the primary node, and the MAC address of the primary node is set as the well-known information. For example, if the first node 10 sends a Bluetooth establishment request to the second node 20, and successfully establishes a Bluetooth connection between the first node 10 and the second node 20, the first node 10 may be set as the primary node, the second node 20 may be set as a secondary node, and a MAC address of the first node 10 is set as the well-known information. In this way, the first node 10 may obtain the well-known information.

In some other embodiments, if the first node 10 and the second node 20 are devices of different types, for example, the first node 10 is a mobile terminal, and the second node 20 is a switch, the second node 20 (for example, the switch) is set as the primary node, and a MAC address of the second node 20 is set as the well-known information. In this way, the second node 20 may obtain the well-known information.

22a: The first node 10 generates a well-known key.

Specifically, the first node 10 generates the well-known key based on the well-known information and by invoking a preset key derivation algorithm.

A formula for generating the well-known key is:
key=KDF (password=subnet_identifier, salt).

key is the well-known key, KDF() is the key derivation algorithm, subnet_identifier is the well-known information, and salt is an input parameter of the key derivation algorithm: salt. In other words, the well-known information and the salt are used as inputs of the key derivation algorithm, so that the corresponding well-known key is output based on the key derivation algorithm.

Optionally, the salt may be a random number generated by the primary node of the communication system 100, and the random number is sent to the secondary node after the secondary node is successfully associated with the primary node.

Certainly, in another embodiment, the salt may also be a fixed value preset in each node. For example, if the preset salt is "1101", each node in the communication system 100 stores the salt "1101", and uses the salt to calculate a well-known key when invoking a corresponding key derivation algorithm.

22b: The second node 20 generates a well-known key.

Specifically, the second node 20 generates the well-known key based on the well-known information and by invoking a preset key derivation algorithm.

A method for generating the well-known key by the second node 20 is the same as the method of the first node 10 in step 22a. Details are not described herein again.

23: The first node 10 generates a network layer address.

Specifically, step 23 specifically includes the following steps.

The first node 10 obtains a local MAC address, and generates a random number.

The first node 10 constructs plaintext data based on the MAC address and the random number.

The first node 10 invokes a preset symmetric encryption algorithm, and uses the plaintext data and the well-known key as input parameters of the symmetric encryption algorithm, to form encrypted data of the plaintext data.

The first node 10 forms the network layer address based on the encrypted data.

The local MAC address is a MAC address of the first node 10.

Optionally, the first node 10 may generate the random number based on a preset pseudo random function.

It may be understood that there are a plurality of manners for constructing the plaintext data. For example, a 16-bit random number is concatenated after the MAC address. For example, if the MAC address is 22CCD848CE53, and the random number is CC, the plaintext data 22CCD848CE53CC is formed. Certainly, the random number may alternatively be placed before or in the middle of the MAC address. A manner of constructing the plaintext data is not limited in this application.

It may be understood that an encryption formula of the plaintext data is:
Address=symmetric_crypt (plaintext data, key, ENCRYPT).

Address is the network layer address, symmetric_crypt() is the preset symmetric encryption algorithm, key is the well-known key, and ENCRYPT is an encryption identifier.

Specifically, the well-known key is used as a key of the symmetric encryption algorithm, and the preset symmetric encryption algorithm is invoked to encrypt the plaintext data. Encrypted data is output based on the symmetric encryption algorithm, and the data is the network layer address.

Certainly, in another embodiment, further processing may be performed on the encrypted data, for example, adding a random number or re-sorting, to form the network layer address through further processing.

In this way, the first node 10 in the communication system 100 forms the well-known key based on the well-known information and the preset key derivation algorithm, and generates the network layer address of the first node 10 based on the well-known key, the MAC address of the primary node, and the preset encryption algorithm. Because the network layer address is generated only inside the first node 10, signaling interaction between the first node 10 and another node is not required, thereby reducing delay overheads of obtaining the network layer address by the node.

Further, the first node 10 generates the network layer address by itself, so that allocation-free and resolution-free of the network layer address can be implemented, thereby further reducing a delay caused during use of the network layer address. In addition, the network layer address is generated based on the MAC address of the node, and the MAC address is encrypted based on the encryption algorithm to form the network layer address. Therefore, the MAC address is prevented from being leaked, and security of the MAC address is enhanced. The MAC address and the random number are used to construct the plaintext data, and the random number is introduced, to improve randomness of the plaintext data. In addition, because the MAC address is unique, a conflict between network layer addresses may be prevented.

Refer to FIG. 2 again. After the network layer address is generated, the method further includes:
The second node 20 sends an address request message to the first node 10.

The first node 10 sends an address response message corresponding to the address request message to the second node 20. The address response message carries the network layer address of the first node 10.

In other words, the second node 20 sends the address request message to the first node 10, to obtain the network layer address of the first node 10.

It may be understood that, in another embodiment, the second node 20 may further obtain the network layer address of the first node 10 in another manner. For example, the second node 20 may obtain the network layer address of the first node 10 in a domain name resolution manner.

After the second node 20 obtains the network layer address of the first node 10, the method further includes the following step.

24: The second node 20 reversely resolves the MAC address in the network layer address.

Specifically, the second node 20 decrypts the network layer address by using the well-known key generated by the second node in step 22b and the obtained network layer address as inputs of the symmetric encryption algorithm, to obtain the plaintext data.

Then, the MAC address is extracted from the plaintext data.

Symmetric encryption algorithms stored in all nodes on the same layer 2 network are the same, and may be symmetric encryption algorithms of a same type.

Specifically, a decryption formula of the network layer address is as follows:
Plaintext data=symmetric_crypt (Address, key, DECRYPT).

Address is the network layer address, symmetric_crypt() is the preset symmetric encryption algorithm, and is used to decrypt the network layer address to obtain the plaintext data, key is the well-known key, and DECRYPT is a decryption identifier.

Specifically, the second node 20 uses the network layer address as an input of the preset symmetric encryption algorithm, and uses the well-known key as a decryption key of the symmetric encryption algorithm to decrypt the network layer address by invoking the symmetric encryption algorithm. Decrypted data is output based on the symmetric encryption algorithm, and the decrypted data is the plaintext data.

A formula for extracting the MAC address from the plaintext data is as follows:
MAC=GetBits (plaintext data, 0-48).

MAC is the extracted MAC address, and GetBits() is an extraction function, and is used to extract 48-bit data from the plaintext data, where the 48-bit data is the MAC address.

Certainly, in another embodiment, a corresponding extraction manner may be set in the extraction function based on an arrangement manner of the MAC address and the random number in the plaintext data. A manner of extracting the MAC address is not limited in this application.

In this way, when the first node 10 in the communication system 100 generates the network layer address, another node (for example, the second node 20) in the communication system 100 may decrypt the network layer address of the first node 10 based on the well-known key and the preset symmetric encryption algorithm, to obtain the MAC address of the first node.

In some embodiments, the second node 20 is further configured to form a correspondence between the MAC address of the first node and the network layer address, and store the correspondence in the second node 20. In this way, when the second node 20 performs data transmission with the first node 10 again, the second node 20 does not need to obtain the corresponding MAC address by decrypting the network layer address of the first node 10 again, and only needs to search the stored correspondence based on the obtained network layer address to obtain the corresponding MAC address.

As shown in FIG. 2, in some embodiments, the method further includes the following steps.

The first node 10 obtains information about a routing table. The information about a routing table may be obtained by the first node from another node, and the information about a routing table includes a node identifier of the node and a network layer address corresponding to the node identifier. The node identifier may be a universally unique identifier (Universally Unique Identifier, UUID) of the node.

After the first node 10 generates the network layer address, the first node 10 determines whether the network layer address is the same as a network layer address of another node in the routing table.

If no network layer address same as that of the first node 10 exists in the routing table, it is determined that the generated network layer address is the network layer address of the first node 10. If a network layer address same as the network layer address generated by the first node 10 exists in the information about a routing table, the first node 10 updates the network layer address. In this way, a conflict check of network layer addresses is implemented based on the information about a routing table, to avoid a conflict between network layer addresses of all nodes on the same layer 2 network.

Specifically, that the first node 10 updates the network layer address includes:
generating a new random number again, and forming new plaintext data based on a MAC address of the first node 10 and the new random number; and
encrypting the new plaintext data based on a preset encryption algorithm and a well-known key, to form a new network layer address.

It may be understood that the first node 10 may further update an updated network layer address to another node through the route updating process.

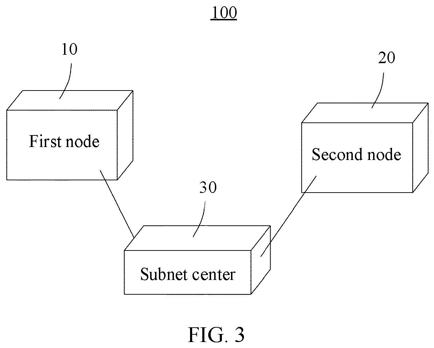

FIG. 3 is a diagram of an architecture of another communication system 100 according to an embodiment of this application. The communication system 100 includes a first node 10, a second node 20, and a subnet center 30. The first node 10 may communicate with the second node 20 via the subnet center 30, and the first node 10 and the second node 20 belong to a same layer 2 network.

Certainly, in another embodiment, the first node 10 may directly communicate with the second node 20.

Optionally, a data link for communication between the first node 10 and the second node 20 may include various types of connection media, for example, may be a short-distance connection technology, including 802.11b/g, a radio frequency identification (Radio Frequency Identification, RFID) technology, and an ultra-wideband (Ultra-Wideband, UWB) technology. Certainly, it is not excluded that there is another technology that may be used to support communication between the first node 10 and the second node 20. This is not specifically limited herein.

In addition, the first node 10 and the second node 20 may be devices of a same type. For example, both the first node 10 and the second node 20 are mobile terminals, and the first node 10 and the second node 20 may also be devices of different types. For example, the first node 10 may be a mobile terminal, and the second node 20 may be an access point.

In this embodiment, the well-known information may be a MAC address of the subnet center 30. Certainly, the well-known information may also be other information formed by the subnet center, for example, identification information of the subnet center 30 and a random number generated by the subnet center 30, provided that the subnet center 30 can send the information to another node and the information can be obtained by all the nodes on the layer 2 network.

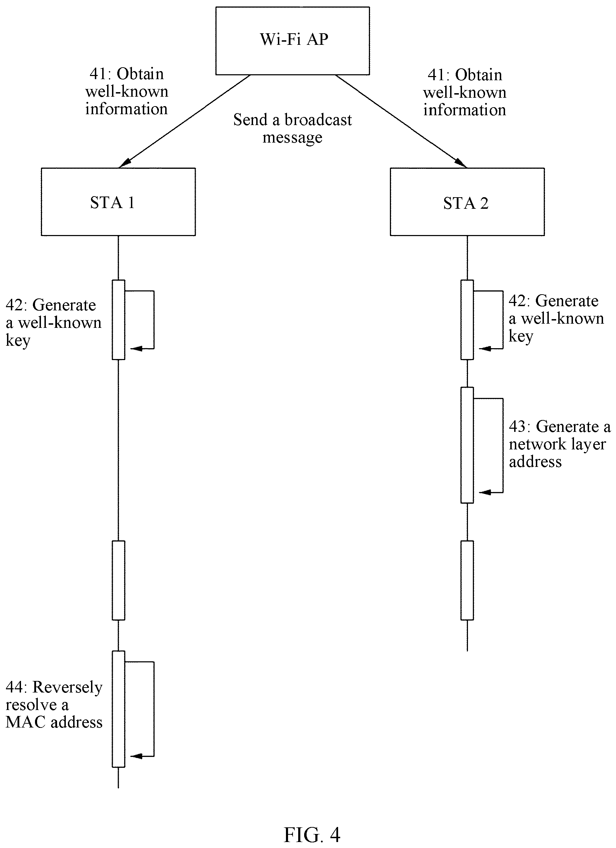

FIG. 4 shows a method for generating a network layer address according to this application. The method is applied to the communication system 100 shown in FIG. 3.

The method for generating a network layer address provided in FIG. 4 is similar to the method provided in FIG. 2, and the node locally generates a network layer address of the node itself. A difference lies in a manner of obtaining well-known information.

Specifically, in this embodiment, the subnet center 30 is a Wi-Fi wireless access point (Access Point, AP). For example, the subnet center 30 may be a wireless router. Both the first node 10 and the second node 20 are stations (STAs, Stations). For example, the first node 10 is a STA 1, and the second node 20 is a STA 2. Certainly, in another embodiment, the subnet center 30, the first node 10, and the second node 20 may also be implemented in another manner.

As shown in FIG. 4, the method for generating a network layer address in this embodiment includes the following specific steps.

41: The STA 1 and the STA 2 obtain well-known information.

Specifically, the Wi-Fi AP periodically broadcasts a beacon (Beacon) frame. The beacon frame includes BSSID (Basic Service Set Identifier) information, and a value of a BSSID is a MAC address of the Wi-Fi AP. The STA 1 and the STA 2 receive the beacon frame, parse the BSSID in the beacon frame, and use the BSSID as the well-known information.

Specifically, the subnet center 30 sends a broadcast message to the first node 10 and the second node 20, to send the well-known information to the first node 10 and the second node 20. The broadcast message carries the well-known information. The first node 10 and the second node 20 receive the broadcast message and parse the broadcast message, to obtain the well-known information.

In this embodiment, the well-known information is a MAC address of the subnet center 30. In another embodiment, the well-known information may be a random number generated by the subnet center 30 or other identification information of the subnet center 30.

42: The STA 1 and the STA 2 generate a well-known key.

Specifically, the STA1 and the STA2 generate the well-known key based on the well-known information and a preset key derivation algorithm.

In an embodiment, a formula for generating the well-known key by the STA 1 and the STA 2 is:
key=PBKDF2 (PRF=HMAC, password=BSSID, salt="NewIP", C=1000, dklen=128).

The key derivation algorithm is PBKDF2(), a character string "NewIP" is set to a salt, and all nodes use a same salt. In this way, the STA 1 and the STA2 use the well-known information and the salt as inputs of the key derivation algorithm PBKDF2, and the well-known key is output based on the key derivation algorithm.

In some embodiments, the STA 1 and the STA 2 may further set a number of iterations c of the key derivation algorithm and a length of the key key. In this embodiment, the number of iterations is set to 1000, and the length of the key is 128 bits. Certainly, in another embodiment, a corresponding number of iterations or a corresponding key length may be set based on an actual requirement. This is not limited in this application.

In another embodiment, the subnet center 30 generates a random number, and sends a broadcast message to the first node 10 and the second node 20, to send the random number to the first node 10 and the second node 20, where the broadcast message carries the random number. The first node 10 and the second node 20 receive the broadcast message, parse the broadcast message, to obtain the random number, and use the random number as the salt of the key derivation algorithm. In other words, the salt of the key derivation algorithm may be a fixed value preset in each node, or may be a random number sent by the subnet center 30 to each node of the subnet center 30 through the broadcast message.

43: The STA 2 generates a network layer address.

Specifically, the STA 2 generates a random number, forms plaintext data based on the random number and a MAC address of the STA 2, and encrypts the plaintext data based on a symmetric encryption algorithm and the well-known key, to form ciphertext data. The ciphertext data is the network layer address.

In an embodiment, a formula for constructing the plaintext data by the STA 2 is:
Plaintext data=strcat (MAC, (unit16)random ()).

MAC is the MAC address of the STA 2, and random() is a random function used to generate a 16-bit random number.

In this embodiment, the STA 2 uses HMAC as a pseudo random function. The 16-bit random number is generated based on the HMAC. The 16-bit random number is concatenated after the MAC address of the STA 2 to generate 64-bit plaintext data.

In an embodiment, an encryption formula for encrypting the plaintext data by the STA 2 is:
Address=blowfish (plaintext data, key, ENCRYPT).

Address is the encrypted data, blowfish is the symmetric encryption algorithm, key is the well-known key, and ENCRYPT is an encryption identifier.

Specifically, the STA 2 invokes the symmetric encryption algorithm blowfish, uses the plaintext data and the well-known key as inputs, sets the blowfish mode to an encryption mode to encrypt the plaintext data, and generates 64-bit ciphertext data. The ciphertext data is the network layer address.

In this way, according to the method for generating a network layer address provided in this embodiment, a network layer address of each node is generated inside the node, and is resolved inside the node, and packet interaction between each node and another node is not required, thereby reducing a delay of network layer address allocation. In addition, the MAC address of the node is not exposed in the network layer address, and only a node on the same layer 2 network can reversely resolve a MAC address of another node. A node not on the same layer 2 network cannot obtain corresponding well-known information, and cannot generate a well-known key, and therefore cannot obtain the MAC address based on the network layer address, thereby achieving an objective of protecting node privacy.

Further, the method for generating a network layer address provided in this application is applicable to the node on the same layer 2 network. The well-known key is used to decrypt a network layer address of another node, to obtain a corresponding MAC address. Compared with the current ARP protocol, the method for generating a network layer address provided in this application does not need protocol interaction, thereby reducing an address resolution delay.

44: The STA 1 reversely resolves the MAC address.

Specifically, after obtaining the network layer address of the STA 2, the STA 1 decrypts the network layer address based on the symmetric encryption algorithm and the well-known key, to obtain the plaintext data; and then extracts the MAC address from the plaintext data.

In an embodiment, a decryption formula of the encrypted data of the STA 1 is:
Plaintext data=blowfish (Address, key, DECRYPT).

Address is the encrypted data, blowfish is the symmetric encryption algorithm, key is the well-known key, and DECRYPT is a decryption identifier.

Specifically, it is determined that the symmetric encryption algorithm corresponding to the STA 2 is blowfish, the STA 1 invokes the blowfish algorithm, uses the network layer address and the well-known key as inputs of the blowfish algorithm, and sets the blowfish mode as a decryption mode. 64-bit plaintext data is output based on the blowfish algorithm. Then, the STA 1 intercepts first 48 bits of the plaintext data to obtain the MAC address of the STA 2.

After obtaining the network layer address of the node, another node may decrypt the network address based on the local well-known key, to obtain the MAC address corresponding to the network. In this way, the MAC address between the nodes may be transmitted based on the network layer address. In a process of transmitting the network layer address, the plaintext data formed based on the MAC address and the random number is encrypted based on the encryption algorithm, to prevent the MAC address from being directly exposed, thereby improving transmission security of the MAC address.

In some embodiments, the STA 1 or the STA 2 is further configured to: obtain information about a routing table, where the information about a routing table includes globally unique identifiers of the at least two nodes and target network layer addresses corresponding to the globally unique identifier. If a target network layer address same as the network layer address generated by the STA 1 or the STA 2 exists in the routing table, the first node is further configured to: form a random number; form new plaintext data based on the local MAC address and the random number; and encrypt new plaintext data based on the well-known key and a preset symmetric encryption algorithm, to form a new network layer address. In this way, whether the network layer address generated by the node is the same as a network layer address of another node is checked based on the information about a routing table. If the network layer address generated by the node is the same as the network layer address of the another node, the node generates a new random number to update the network layer address.

Further, the STA 1 or the STA2 is further configured to form a correspondence between the MAC address of the another node and the network layer address.

Further, if the network layer address generated by the node in FIG. 4 is an IPv6 link-local address (IPv6 link-local address), the method further includes:

Each node forms high 64 bits of the IPv6 link-local address (IPv6 link-local address) in advance, and uses the ciphertext data formed by the node as low 64 bits of the IPv6 link-local address. The high 64 bits and the low 64 bits of the IPv6 link-local address are combined to form complete ciphertext data, that is, the IPv6 link-local address.

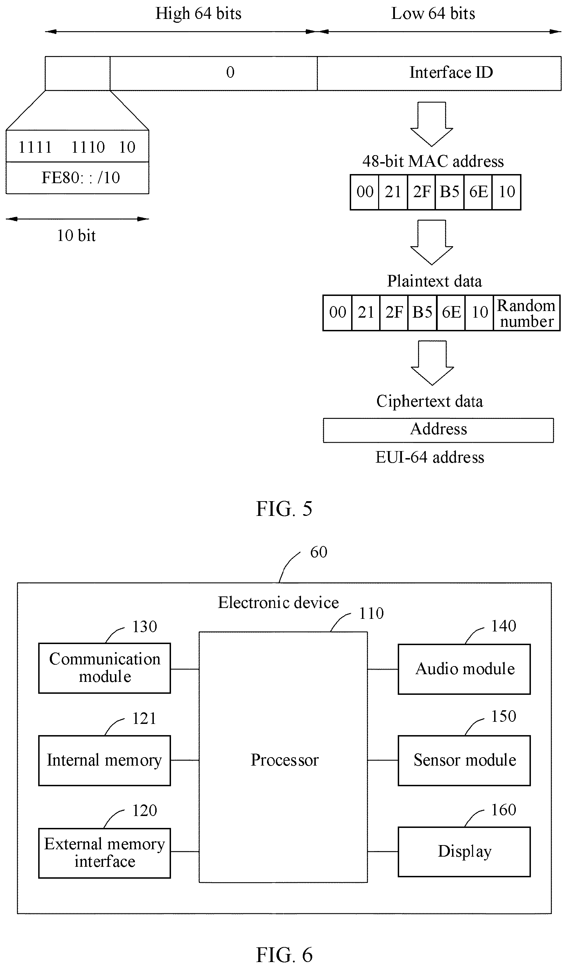

Specifically, refer to FIG. 5. The method for generating the IPv6 local link address includes the following steps.
(1) The first node 10 or the second node 20 determines the high 64 bits of the IPv6 link local address.

In this embodiment, high 64 bits of an IPv6 link local address of each node are all 0xFE80000000000000. Certainly, in other embodiments, the high 64 bits of the IPv6 link local address may also be set to corresponding values in an actual scenario and stored in corresponding nodes. Certainly, the high 64 bits of the IPv6 link local address may also be broadcast to each node by the subnet center through technologies, provided that values of the high 64 bits of the IPv6 link local address set in each node on the same layer 2 network in the communication system are the same.

(2) Obtain the well-known information.

In this embodiment, the well-known information is a MAC address of a switch. The switch sends a broadcast message to the first node 10 and the second node 20, where the broadcast message carries the MAC address of the switch. The first node 10 and the second node 20 receive the broadcast message, parse the broadcast message to obtain the MAC address, and set the MAC address as the well-known information.

(3) Generate the low 64 bits of the IPv6 link local address.

Specifically, the first node 10 or the second node 20 generates a well-known key based on the well-known information and a preset key derivation algorithm; obtains a local MAC address, generates a 16-bit random number, and forms plaintext data based on the local MAC address and the random number; and invokes a preset symmetric encryption algorithm (for example, a blowfish algorithm) and uses the well-known key as an encryption key to encrypt the plaintext data, to obtain ciphertext data. The ciphertext data is the low 64 bits of the IPv6 link local address.

(4) Concatenate the high 64 bits of the IPv6 link local address and the low 64 bits of the IPv6 link local address in sequence to generate a 128-bit IPv6 link local address. The IPv6 link local address is the network layer address.

It may be understood that the foregoing execution sequence is merely an embodiment provided in this application. In another embodiment, step (1) and step (3) may be performed at the same time, or certainly step (1) may be performed after step (3).

FIG. 6 is a diagram of a structure of an electronic device 60. The electronic device 60 may be the foregoing first node or second node, and may be configured to perform a function of the node in the foregoing embodiment.

The electronic device 60 may include a processor 110, an external memory interface 120, an internal memory 121, a communication module 130, an audio module 140, a sensor module 150, a display 160, and the like.

It may be understood that a structure shown in this embodiment of this application does not constitute a specific limitation on the electronic device 60. In some other embodiments of this application, the electronic device 60 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to complete control of instruction reading and instruction execution.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as an audio module, a communication module, and a display through at least one of the foregoing interfaces.

It can be understood that an interface connection relationship between modules illustrated in this embodiment of this application is merely an illustrative description, and does not constitute a limitation on a structure of the electronic device 60. In some other embodiments of this application, the electronic device 60 may alternatively use an interface connection manner different from that in the foregoing embodiment, or use a combination of a plurality of interface connection manners.

The communication module 130 of the electronic device 60 may include a wireless communication module and/or a wired communication module. A communication function of the electronic device 60 may be implemented through an antenna, a wireless communication module, a wired communication module, a modem processor, a baseband processor, and the like.

The antenna may be configured to transmit and receive an electromagnetic wave signal. The antenna in the electronic device 60 may be configured to cover one or more communication frequency bands. When the electronic device 60 includes a plurality of antennas, different antennas may be further multiplexed, to improve antenna utilization. For example, an antenna in the plurality of antennas may be multiplexed as a diversity antenna of a wireless local area network. In some other embodiments, the antenna may be used in combination with a tuning switch.

The wireless communication module may provide a solution, applied to the electronic device 60, to wireless communication such as 2G/3G/4G/5G. For example, the wireless communication module may include at least one filter, a switch, a power amplifier, a low noise amplifier (low noise amplifier, LNA), and the like. The wireless communication module may receive an electromagnetic wave through the antenna, perform processing such as filtering and amplification on the received electromagnetic wave, and send a processed electromagnetic wave to the modem processor for demodulation. The wireless communication module may further amplify a signal modulated by the modem processor, and convert the signal into an electromagnetic wave for radiation through the antenna. In some embodiments, at least some function modules of the wireless communication module may be disposed in the processor 110. In some embodiments, at least some function modules of the wireless communication module and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 160. In some embodiments, the modem processor may be an independent component. In some other embodiments, the modem processor may be independent of the processor 110, and is disposed in a same component with the communication module 130 or another functional module.

The wireless communication module may be further configured to provide a solution, applied to the electronic device 60, to wireless communication including a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like. The wireless communication module may be one or more components that integrate at least one communication processing module. For example, the wireless communication module may receive an electromagnetic wave through an antenna, perform frequency modulation and filtering processing on an electromagnetic wave signal, and send a processed signal to the processor 110. The wireless communication module may further receive a to-be-sent signal from the processor 110, perform frequency modulation and amplification on the to-be-sent signal, and convert the to-be-sent signal into an electromagnetic wave for radiation through the antenna.

In some embodiments, the antenna of the electronic device 60 may be coupled to the wireless communication module, so that the electronic device 60 can communicate with a network and another electronic device through a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 60 may implement a display function through the GPU, the display 160, the application processor, and the like. The GPU is a microprocessor for image processing, and is connected to the display 160 and the application processor. The GPU is configured to: perform mathematical and geometric computation, and render an image. The processor 110 may include one or more GPUs, which execute program instructions to generate or change display information.

The sensor module may include a touch sensor, a pressure sensor, a fingerprint sensor, and the like. The display 160 is configured to display an image, a video, and the like. The display 160 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 60 may include one or more displays 160.

The digital signal processor of the display 160 is configured to process a digital signal, and may further process another digital signal. For example, when the electronic device 60 selects a frequency, the digital signal processor is configured to perform Fourier transformation on frequency energy.

The video codec is configured to compress or decompress a digital video. The electronic device 60 may support one or more video codecs. In this way, the electronic device 60 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure such as a transmission mode between neurons in a human brain to perform rapid processing on input information, and can perform continuous self-learning. The NPU may implement applications such as intelligent cognition of the electronic device 60, for example, image recognition, facial recognition, speech recognition, and text understanding.

The external memory interface 120 may be used to connect to an external storage card, for example, a micro SD card, to extend a storage capability of the electronic device 60. The external memory card communicates with the processor 110 through the external memory interface 120, to implement a data storage function. For example, files such as music and videos are stored in the external storage card. Alternatively, files such as music and a video are transmitted from the electronic device to the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like that are created during use of the electronic device 60. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or the instructions stored in the memory disposed in the processor, to perform various function methods or data processing of the electronic device 60.

The internal memory 121 is configured to store one or more computer programs. The one or more computer programs are configured to be executed by the processor 110. The one or more computer programs include instructions, and the instructions may be used to implement the method for generating a network layer address shown in FIG. 2, FIG. 4, or FIG. 5 in the electronic device 60.

The audio module 140 is configured to convert digital audio information into an analog audio signal for output, and is also configured to convert analog audio input into a digital audio signal. The audio module 140 may be further configured to code and decode an audio signal. In some embodiments, the audio module 140 may be disposed in the processor 110, or some function modules in the audio module 140 are disposed in the processor 110.

An embodiment further provides a computer storage medium. The computer storage medium stores computer instructions. When the computer instructions are run on an electronic device, the electronic device performs the foregoing related method steps to implement the method for generating a network layer address in the foregoing embodiment.

An embodiment further provides a computer program product. When the computer program product runs on a computer, the computer performs the foregoing related steps to implement the method for generating a network layer address in the foregoing embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method for generating a network layer address in the foregoing method embodiment.

The electronic device, the computer storage medium, the computer program product, or the chip provided in this embodiment may be configured to perform the corresponding method provided above. Therefore, for beneficial effect that can be achieved, refer to the beneficial effect of the corresponding method provided above. Details are not described herein again.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is an example. For example, division into the modules or units is logical function division. During actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this invention as defined by the appended claims.

## Claims

1. A communication system, wherein the communication system comprises at least two nodes (10, 20), the at least two nodes (10, 20) belong to a same layer 2 network and the at least two nodes (10, 20) are capable of communicating with each other, the layer 2 network has well-known information, and the well-known information is information that is capable of being obtained by the at least two nodes (10, 20); and
a first node (10) of the at least two nodes is configured to:
obtain (21) the well-known information of the communication system;
form (22a) a well-known key based on the well-known information and a preset key derivation algorithm;
obtain a MAC address of the first node, and form a first random number;
form first plaintext data based on the MAC address of the first node and the first random number;
encrypt the first plaintext data based on the well-known key and a preset symmetric encryption algorithm, to obtain first encrypted data; and
form (23) a first network layer address based on the first encrypted data.

2. The communication system according to claim 1, wherein the communication system further comprises a subnet center (30), and the subnet center (30) is configured to:
send (41) a first broadcast message to the at least two nodes (10, 20), wherein the first broadcast message carries the well-known information; and
the at least two nodes are configured to:
receive (41) the first broadcast message sent by the subnet center (30), and parse the first broadcast message to obtain the well-known information.

3. The communication system according to claim 2, wherein the subnet center (30) is further configured to:
form a second random number; and
send a second broadcast message to the at least two nodes (10, 20), wherein the second broadcast message carries the second random number; and
the at least two nodes are further configured to:
receive the second broadcast message sent by the subnet center (30), and set the second random number as a salt of the key derivation algorithm; and
form the well-known key based on the well-known information, the salt, and the key derivation algorithm.

4. The communication system according to claim 1, wherein the first node (10) is further configured to:
obtain information about a routing table, wherein the information about a routing table comprises globally unique identifiers of the at least two nodes (10, 20) and target network layer addresses corresponding to the globally unique identifiers; and
if a target network layer address same as the first network layer address exists in the routing table, the first node (10) is further configured to:
form a third random number;
form second plaintext data based on the MAC address and the third random number;
encrypt the second plaintext data based on the well-known key and the preset symmetric encryption algorithm, to obtain second encrypted data; and
form a second network layer address based on the second encrypted data.

5. The communication system according to claim 1, wherein a second node (20) of the at least two nodes is configured to:
obtain a network layer address generated by the first node (10); and
decrypt the network layer address of the first node (10) based on the well-known key and the symmetric encryption algorithm, to obtain a MAC address of the target node.

6. The communication system according to claim 5, wherein the second node is further configured to:
form a correspondence between the MAC address of the first node (10) and the network layer address.

7. The communication system according to claim 1, wherein the at least two nodes are further configured to:
determine a target node in the at least two nodes (10, 20) as a primary node; and
obtain a MAC address of the target node and set the MAC address of the target node as the well-known information.

8. A method for generating a network layer address, applied to a node, wherein the node belongs to a layer 2 network, the layer 2 network has well-known information, and the method comprises:
obtaining the well-known information;
forming a well-known key based on the well-known information and a preset key derivation algorithm;
obtaining a MAC address of the node, and forming a first random number;
forming first plaintext data based on the MAC address of the node and the first random number;
encrypting the first plaintext data based on the well-known key and a preset symmetric encryption algorithm, to obtain first encrypted data; and
forming a first network layer address based on the first encrypted data.

9. The method according to claim 8, wherein the layer 2 network has a subnet center (30), and the obtaining the well-known information comprises:
receiving a first broadcast message sent by the subnet center (30), and parsing the first broadcast message to obtain the well-known information, wherein the first broadcast message carries the well-known information.

10. The method according to claim 9, wherein the forming a well-known key based on the well-known information and a preset key derivation algorithm comprises:
receiving a second broadcast message sent by the subnet center (30), wherein the second broadcast message carries a second random number formed by the subnet center (30);
setting the second random number as a salt of the key derivation algorithm; and
forming the well-known key based on the well-known information, the salt, and the key derivation algorithm.

11. The method according to claim 8, wherein the method further comprises:
obtaining information about a routing table, wherein the information about a routing table comprises globally unique identifiers of all nodes on the layer 2 network and target network layer addresses corresponding to the globally unique identifiers;
if a target network layer address same as the first network layer address exists in the routing table, forming a third random number;
forming second plaintext data based on the MAC address of the node and the third random number;
encrypting the second plaintext data based on the well-known key and the symmetric encryption algorithm, to obtain second encrypted data; and
forming a second network layer address based on the second encrypted data.

12. The method according to claim 8, wherein the layer 2 network further comprises at least one node, and the method further comprises:
obtaining a third network layer address of a target node on the layer 2 network; and
decrypting the third network layer address based on the well-known key and the symmetric encryption algorithm, to obtain a MAC address of the target node.

13. The method according to claim 12, wherein the method further comprises:
forming a correspondence between the MAC address and the third network layer address.

14. The method according to claim 8, wherein the obtaining the well-known information comprises:
determining that a target node of the layer 2 network is a primary node; and
obtaining a MAC address of the target node and setting the MAC address of the target node as the well-known information.

15. A computer-readable storage medium, wherein the computer-readable storage medium stores computer instructions, and when the computer instructions are run on an electronic device, the electronic device is enabled to perform the method according to any one of claims 8 to 14.

## Patentansprüche

1. Kommunikationssystem, wobei das Kommunikationssystem mindestens zwei Knoten (10, 20) umfasst, wobei die mindestens zwei Knoten (10, 20) zum gleichen Layer-2-Netzwerk gehören und die mindestens zwei Knoten (10, 20) fähig sind, miteinander zu kommunizieren, das Layer-2-Netzwerk allgemein bekannte Informationen aufweist und die allgemein bekannten Informationen Informationen sind, die durch die mindestens zwei Knoten (10, 20) erhaltbar sind; und
ein erster Knoten (10) der mindestens zwei Knoten für Folgendes konfiguriert ist:
Erhalten (21) der allgemein bekannten Informationen des Kommunikationssystems;
Bilden (22a) eines allgemein bekannten Schlüssels, basierend auf den allgemein bekannten Informationen und einem voreingestellten Algorithmus zur Schlüsselableitung;
Erhalten einer MAC-Adresse des ersten Knotens und Bilden einer ersten Zufallszahl;
Bilden erster Klartextdaten, basierend auf der MAC-Adresse des ersten Knotens und der ersten Zufallszahl;
Verschlüsseln der ersten Klartextdaten, basierend auf dem allgemein bekannten Schlüssel und einem voreingestellten Algorithmus zur symmetrischen Verschlüsselung, um erste verschlüsselte Daten zu erhalten; und
Bilden (23) einer ersten Netzwerkschichtadresse, basierend auf den ersten verschlüsselten Daten.

2. Kommunikationssystem nach Anspruch 1, wobei das Kommunikationssystem ferner ein Subnetzzentrum (30) umfasst und das Subnetzzentrum (30) für Folgendes konfiguriert ist:
Senden (41) einer ersten Broadcast-Nachricht an die mindestens zwei Knoten (10, 20), wobei die erste Broadcast-Nachricht die allgemein bekannten Informationen mitführt; und
wobei die mindestens zwei Knoten für Folgendes konfiguriert sind:
Empfangen (41) der ersten Broadcast-Nachricht, die von dem Subnetzzentrum (30) gesendet wird, und Parsen der ersten Broadcast-Nachricht, um die allgemein bekannten Informationen zu erhalten.

3. Kommunikationssystem nach Anspruch 2, wobei das Subnetzzentrum (30) ferner für Folgendes konfiguriert ist:
Bilden einer zweiten Zufallszahl; und
Senden einer zweiten Broadcast-Nachricht an die mindestens zwei Knoten (10, 20), wobei die zweite Broadcast-Nachricht die zweite Zufallszahl mitführt; und
wobei die mindestens zwei Knoten ferner für Folgendes konfiguriert sind:
Empfangen der von dem Subnetzzentrum (30) gesendeten zweiten Broadcast-Nachricht und Einstellen der zweiten Zufallszahl als ein Salt des Algorithmus zur Schlüsselableitung; und
Bilden des allgemein bekannten Schlüssels, basierend auf den allgemein bekannten Informationen, dem Salt und dem Algorithmus zur Schlüsselableitung.

4. Kommunikationssystem nach Anspruch 1, wobei der erste Knoten (10) ferner für Folgendes konfiguriert ist:
Erhalten von Informationen über eine Routing-Tabelle, wobei die Informationen über eine Routing-Tabelle weltweit eindeutige Kennungen der mindestens zwei Knoten (10, 20) und Zielnetzwerkschichtadressen, die den weltweit eindeutigen Kennungen entsprechen, umfassen; und
wenn in der Routing-Tabelle eine Zielnetzwerkschichtadresse existiert, die gleich der ersten Netzwerkschichtadresse ist, der erste Knoten (10) ferner für Folgendes konfiguriert ist:
Bilden einer dritten Zufallszahl;
Bilden zweiter Klartextdaten, basierend auf der MAC-Adresse und der dritten Zufallszahl;
Verschlüsseln der zweiten Klartextdaten, basierend auf dem allgemein bekannten Schlüssel und dem voreingestellten Algorithmus zur symmetrischen Verschlüsselung, um zweite verschlüsselte Daten zu erhalten; und
Bilden einer zweiten Netzwerkschichtadresse, basierend auf den zweiten verschlüsselten Daten.

5. Kommunikationssystem nach Anspruch 1, wobei ein zweiter Knoten (20) der mindestens zwei Knoten für Folgendes konfiguriert ist:
Erhalten einer von dem ersten Knoten (10) erzeugten Netzwerkschichtadresse; und
Entschlüsseln der Netzwerkschichtadresse des ersten Knotens (10), basierend auf dem allgemein bekannten Schlüssel und dem Algorithmus zur symmetrischen Verschlüsselung, um eine MAC-Adresse des Zielknotens zu erhalten.

6. Kommunikationssystem nach Anspruch 5, wobei der zweite Knoten ferner für Folgendes konfiguriert ist:
Bilden einer Entsprechung zwischen der MAC-Adresse des ersten Knotens (10) und der Netzwerkschichtadresse.

7. Kommunikationssystem nach Anspruch 1, wobei die mindestens zwei Knoten ferner für Folgendes konfiguriert sind:
Bestimmen eines Zielknotens in den mindestens zwei Knoten (10, 20) als einen primären Knoten; und
Erhalten einer MAC-Adresse des Zielknotens und Einstellen der MAC-Adresse des Zielknotens als die allgemein bekannten Informationen.

8. Verfahren zum Erzeugen einer Netzwerkschichtadresse, angewandt auf einen Knoten, wobei der Knoten zu einem Layer-2-Netzwerk gehört, das Layer-2-Netzwerk allgemein bekannte Informationen aufweist und das Verfahren Folgendes umfasst:
Erhalten der allgemein bekannten Informationen;
Bilden eines allgemein bekannten Schlüssels, basierend auf den allgemein bekannten Informationen und einem voreingestellten Algorithmus zur Schlüsselableitung;
Erhalten einer MAC-Adresse des Knotens und Bilden einer ersten Zufallszahl;
Bilden erster Klartextdaten, basierend auf der MAC-Adresse des Knotens und der ersten Zufallszahl;
Verschlüsseln der ersten Klartextdaten, basierend auf dem allgemein bekannten Schlüssel und einem voreingestellten Algorithmus zur symmetrischen Verschlüsselung, um erste verschlüsselte Daten zu erhalten; und
Bilden einer ersten Netzwerkschichtadresse, basierend auf den ersten verschlüsselten Daten.

9. Verfahren nach Anspruch 8, wobei das Layer-2-Netzwerk ein Subnetzzentrum (30) umfasst und das Erhalten der allgemein bekannten Informationen Folgendes umfasst:
Empfangen einer ersten Broadcast-Nachricht, die von dem Subnetzzentrum (30) gesendet wird, und Parsen der ersten Broadcast-Nachricht, um die allgemein bekannten Informationen zu erhalten, wobei die erste Broadcast-Nachricht die allgemein bekannten Informationen mitführt.

10. Verfahren nach Anspruch 9, wobei das Bilden eines allgemein bekannten Schlüssels, basierend auf den allgemein bekannten Informationen und einem voreingestellten Algorithmus zur Schlüsselableitung Folgendes umfasst:
Empfangen einer zweiten Broadcast-Nachricht, die von dem Subnetzzentrum (30) gesendet wird, wobei die zweite Broadcast-Nachricht eine zweite Zufallszahl mitführt, die von dem Subnetzzentrum (30) gebildet wird;
Einstellen der zweiten Zufallszahl als ein Salt des Algorithmus zur Schlüsselableitung; und
Bilden des allgemein bekannten Schlüssels, basierend auf den allgemein bekannten Informationen, dem Salt und dem Algorithmus zur Schlüsselableitung.

11. Verfahren nach Anspruch 8, wobei das Verfahren ferner Folgendes umfasst:
Erhalten von Informationen über eine Routing-Tabelle, wobei die Informationen über eine Routing-Tabelle weltweit eindeutige Kennungen aller Knoten auf dem Layer-2-Netzwerk und Zielnetzwerkschichtadressen, die den weltweit eindeutigen Kennungen entsprechen, umfassen;
wenn in der Routing-Tabelle eine Zielnetzwerkschichtadresse existiert, die gleich der ersten Netzwerkschichtadresse ist, Bilden einer dritten Zufallszahl;
Bilden zweiter Klartextdaten, basierend auf der MAC-Adresse des Knotens und der dritten Zufallszahl;
Verschlüsseln der zweiten Klartextdaten, basierend auf dem allgemein bekannten Schlüssel und dem Algorithmus zur symmetrischen Verschlüsselung, um zweite verschlüsselte Daten zu erhalten; und
Bilden einer zweiten Netzwerkschichtadresse, basierend auf den zweiten verschlüsselten Daten.

12. Verfahren nach Anspruch 8, wobei das Layer-2-Netzwerk ferner mindestens einen Knoten umfasst und das Verfahren ferner Folgendes umfasst:
Erhalten einer dritten Netzwerkschichtadresse eines Zielknotens auf dem Layer-2-Netzwerk; und
Entschlüsseln der dritten Netzwerkschichtadresse, basierend auf dem allgemein bekannten Schlüssel und dem Algorithmus zur symmetrischen Verschlüsselung, um eine MAC-Adresse des Zielknotens zu erhalten.

13. Verfahren nach Anspruch 12, wobei das Verfahren ferner Folgendes umfasst:
Bilden einer Entsprechung zwischen der MAC-Adresse und der dritten Netzwerkschichtadresse.

14. Verfahren nach Anspruch 8, wobei das Erhalten der allgemein bekannten Informationen Folgendes umfasst:
Bestimmen, dass ein Zielknoten des Layer-2-Netzwerks ein primärer Knoten ist; und
Erhalten einer MAC-Adresse des Zielknotens und Einstellen der MAC-Adresse des Zielknotens als die allgemein bekannten Informationen.

15. Computerlesbares Speichermedium, wobei das computerlesbare Speichermedium Computeranweisungen speichert, und wenn die Computeranweisungen auf einem elektronischen Gerät abgearbeitet werden, das elektronische Gerät befähigt ist, das Verfahren nach einem der Ansprüche 8 bis 14 durchzuführen.

## Revendications

1. Système de communication, le système de communication comprenant au moins deux nœuds (10, 20), les au moins deux nœuds (10, 20) appartenant à un même réseau de couche 2 et les au moins deux nœuds (10, 20) étant capables de communiquer entre eux, le réseau de couche 2 disposant d'informations bien connues, et les informations bien connues étant des informations qui peuvent être obtenues par les au moins deux nœuds (10, 20) ; et
un premier nœud (10) des au moins deux nœuds étant configuré pour :
obtenir (21) les informations bien connues du système de communication ;
former (22a) une clé bien connue sur la base des informations bien connues et d'un algorithme de dérivation de clé prédéfini ;
obtenir une adresse MAC du premier nœud et former un premier nombre aléatoire ;
former des premières données en clair sur la base de l'adresse MAC du premier nœud et du premier nombre aléatoire ;
chiffrer les premières données en clair sur la base de la clé bien connue et d'un algorithme de chiffrement symétrique prédéfini, afin d'obtenir des premières données chiffrées ; et
former (23) une première adresse de couche réseau sur la base des premières données chiffrées.

2. Système de communication selon la revendication 1, le système de communication comprenant en outre un centre de sous-réseau (30), et le centre de sous-réseau (30) étant configuré pour :
envoyer (41) un premier message de diffusion aux au moins deux nœuds (10, 20), le premier message de diffusion transportant les informations bien connues ; et
les au moins deux nœuds étant configurés pour :
recevoir (41) le premier message de diffusion envoyé par le centre de sous-réseau (30), et analyser le premier message de diffusion pour obtenir les informations bien connues.

3. Système de communication selon la revendication 2, dans lequel le centre de sous-réseau (30) est en outre configuré pour :
former un deuxième nombre aléatoire ; et
envoyer un deuxième message de diffusion aux au moins deux nœuds (10, 20), le deuxième message de diffusion transportant le deuxième nombre aléatoire ; et
les au moins deux nœuds étant en outre configurés pour :
recevoir le deuxième message de diffusion envoyé par le centre de sous-réseau (30), et définir le deuxième nombre aléatoire en tant que sel de l'algorithme de dérivation de clé ; et
former la clé bien connue sur la base des informations bien connues, du sel et de l'algorithme de dérivation de clé.

4. Système de communication selon la revendication 1, dans lequel le premier nœud (10) est en outre configuré pour :
obtenir des informations sur une table de routage, les informations sur une table de routage comprenant des identifiants globalement uniques des au moins deux nœuds (10, 20) et des adresses de couche réseau cibles correspondant aux identifiants globalement uniques ; et
si une adresse de couche réseau cible identique à la première adresse de couche réseau existe dans la table de routage, le premier nœud (10) est en outre configuré pour :
former un troisième nombre aléatoire ;
former des deuxièmes données en clair sur la base de l'adresse MAC et du troisième nombre aléatoire ;
chiffrer les deuxièmes données en clair sur la base de la clé bien connue et de l'algorithme de chiffrement symétrique prédéfini, afin d'obtenir des deuxièmes données chiffrées ; et
former une deuxième adresse de couche réseau sur la base des deuxièmes données chiffrées.

5. Système de communication selon la revendication 1, dans lequel un deuxième nœud (20) parmi les au moins deux nœuds est configuré pour :
obtenir une adresse de couche réseau générée par le premier nœud (10) ; et
déchiffrer l'adresse de couche réseau du premier nœud (10) sur la base de la clé bien connue et de l'algorithme de chiffrement symétrique, afin d'obtenir une adresse MAC du nœud cible.

6. Système de communication selon la revendication 5, dans lequel le deuxième nœud est en outre configuré pour :
former une correspondance entre l'adresse MAC du premier nœud (10) et l'adresse de couche réseau.

7. Système de communication selon la revendication 1, dans lequel les au moins deux nœuds sont en outre configurés pour :
déterminer un nœud cible parmi les au moins deux nœuds (10, 20) en tant que nœud principal ; et
obtenir une adresse MAC du nœud cible et définir l'adresse MAC du nœud cible en tant qu'informations bien connues.

8. Procédé de génération d'une adresse de couche réseau, appliqué à un nœud, le nœud appartenant à un réseau de couche 2, le réseau de couche 2 disposant d'informations bien connues, et le procédé comprenant les étapes suivantes :
obtenir les informations bien connues ;
former une clé bien connue sur la base des informations bien connues et d'un algorithme de dérivation de clé prédéfini ;
obtenir une adresse MAC du nœud et former un premier nombre aléatoire ;
former des premières données en clair sur la base de l'adresse MAC du nœud et du premier nombre aléatoire ;
chiffrer les premières données en clair sur la base de la clé bien connue et d'un algorithme de chiffrement symétrique prédéfini, afin d'obtenir des premières données chiffrées ; et
former une première adresse de couche réseau sur la base des premières données chiffrées.

9. Procédé selon la revendication 8, dans lequel le réseau de couche 2 comprend un centre de sous-réseau (30), et l'obtention des informations bien connues comprend les étapes suivantes :
recevoir un premier message de diffusion envoyé par le centre de sous-réseau (30), et analyser le premier message de diffusion pour obtenir les informations bien connues, le premier message de diffusion transportant les informations bien connues.

10. Procédé selon la revendication 9, dans lequel la formation d'une clé bien connue sur la base des informations bien connues et d'un algorithme de dérivation de clé prédéfini comprend les étapes suivantes :
recevoir un deuxième message de diffusion envoyé par le centre de sous-réseau (30), le deuxième message de diffusion transportant un deuxième nombre aléatoire formé par le centre de sous-réseau (30) ;
définir le deuxième nombre aléatoire en tant que sel de l'algorithme de dérivation de clé ; et
former la clé bien connue sur la base des informations bien connues, du sel et de l'algorithme de dérivation de clé.

11. Procédé selon la revendication 8, dans lequel le procédé comprend en outre les étapes suivantes :
obtenir des informations sur une table de routage, les informations sur une table de routage comprenant des identifiants globalement uniques de tous les nœuds sur le réseau de couche 2 et des adresses de couche réseau cibles correspondant aux identifiants globalement uniques ;
si une adresse de couche réseau cible identique à la première adresse de couche réseau existe dans la table de routage, former un troisième nombre aléatoire ;
former des deuxièmes données en clair sur la base de l'adresse MAC du nœud et du troisième nombre aléatoire ;
chiffrer les deuxièmes données en clair sur la base de la clé bien connue et de l'algorithme de chiffrement symétrique, afin d'obtenir des deuxièmes données chiffrées ; et
former une deuxième adresse de couche réseau sur la base des deuxièmes données chiffrées.

12. Procédé selon la revendication 8, dans lequel le réseau de couche 2 comprend en outre au moins un nœud, et le procédé comprend en outre les étapes suivantes :
obtenir une troisième adresse de couche réseau d'un nœud cible sur le réseau de couche 2 ; et
déchiffrer la troisième adresse de couche réseau sur la base de la clé bien connue et de l'algorithme de chiffrement symétrique, afin d'obtenir une adresse MAC du nœud cible.

13. Procédé selon la revendication 12, dans lequel le procédé comprend en outre l'étape suivante :
former une correspondance entre l'adresse MAC et la troisième adresse de couche réseau.

14. Procédé selon la revendication 8, dans lequel l'obtention des informations bien connues comprend les étapes suivantes :
déterminer qu'un nœud cible du réseau de couche 2 est un nœud principal ; et
obtenir une adresse MAC du nœud cible et définir l'adresse MAC du nœud cible en tant qu'informations bien connues.

15. Support de stockage lisible par ordinateur, le support de stockage lisible par ordinateur stockant des instructions informatiques et, lorsque les instructions informatiques sont exécutées sur un dispositif électronique, le dispositif électronique est activé pour exécuter le procédé selon l'une quelconque des revendications 8 à 14.
